Europäisches Patentamt

European Patent Office

Office européen des brevets

(19)

(11) Veröffentlichungsnummer: **0 431 413 A2**

## (12) EUROPÄISCHE PATENTANMELDUNG

(21) Anmeldenummer: 90122366.9

(22) Anmeldetag: 23.11.90

(51) Int. Cl.⁵: **C08G  18/32**, C08G 18/40,
C08G 18/70, C08L 75/04

(30) Priorität: 06.12.89 DE 3940271

(43) Veröffentlichungstag der Anmeldung:
**12.06.91 Patentblatt  91/24**

(84) Benannte Vertragsstaaten:
**AT BE CH DE ES FR GB IT LI NL SE**

(71) Anmelder: **BAYER AG**

**W-5090 Leverkusen 1 Bayerwerk(DE)**

(72) Erfinder: **Grögler, Gerhard, Dr.**
**von-Diergardt-Strasse 48**
**W-5090 Leverkusen 1(DE)**
Erfinder: **Hess, Heinrich, Dr.**
**Auf der Schildwache 13a**
**W-5000 Köln 80(DE)**
Erfinder: **Kopp, Richard, Dr.**
**Bilharzstrasse 15**
**W-5000 Köln 80(DE)**
Erfinder: **Rasshofer, Werner, Dr.**
**Leopold-Gmelin-Strasse 31**
**W-5000 Köln 80(DE)**

(54) **Wärmehärtbare Reaktivpulver auf Basis von Polyurethanen.**

(57)  Die Erfindung betrifft ein Verfahren zur Herstellung von pulverförmigen, in der Hitze aushärtbaren Reaktionsmischungen aus einem festen Polyisocyanat und bei Raumtemperatur festen NCO-aktiven hochmolekularen und gegebenenfalls festen oder flüssigen niedermolekularen Verbindungen, dadurch gekennzeichnet, daß das Reaktionsgemisch in Form einer Schmelze einem Emulgator enthaltenden inerten Lösungsmittel zugesetzt wird und daß das sich bildende pulverförmige Reaktionsgemisch alle Ausgangskomponenten in noch unvernetztem Zustand enthält.

EP 0 431 413 A2

# WÄRMEHÄRTBARE REAKTIV-PULVER AUF BASIS VON POLYURETHANEN

In der DE-OS 2 330 601 wird ein Verfahren zur direkten Herstellung von Polyurethanen in feinverteilter Form beschrieben, wobei die Ausgangskomponenten Polyol und Polyisocyanat in einem inerten Lösungsmittel in Gegenwart eines polymeren oberflächenaktiven Mittels (Emulgator) zur Reaktion gelangen. Das charakteristische Merkmal dieses Verfahrens besteht darin, daß die im Lösungsmittel unlösliche Polyolverbindung mittels des Emulgators fein emulgiert wird. Zu dieser Emulsion wird dann ein beliebiges Polyisocyanat in flüssiger Form zugesetzt, das in dem betreffenden Lösungsmittel löslich ist. Es erfolgt an der Grenzfläche des Polyoltröpfchens eine Polyaddition und das sich bildende und im Lösungsmittel unlösliche Polyurethan fällt in Form eines feinteiligen Pulvers aus. Es handelt sich um völlig vernetzte Polyurethane, die, in geschmolzener Form verarbeitet, hohe mechanische Eigenschaften zeigen. Die Pulver werden beispielhaft als Anstrich- oder Beschichtungsmassen und Klebstoffe für textile Flächengebilde eingesetzt.

Technische Artikel werden in der Presse unter Formgebung hergestellt.

Diese Pulver haben jedoch den schwerwiegenden Nachteil, daß ihre Verarbeitungstemperatur dicht bei der Temperatur liegt, wo bereits Polyurethan-Rückspaltungsreaktionen einsetzen. Da diese thermoplastischen Polyurethane bereits ihr endgültiges Molekulargewicht besitzen, das verhältnismäßig hoch sein muß, damit sie gute mechanische Eigenschaften aufweisen, haben sie bei der maximalen Temperatur, bei der sie verarbeitet werden können, hohe Schmelzviskositäten. In vielen Fällen wird dadurch auch das Fließverhalten der Schmelze stark negativ beeinflußt.

In der DE-OS 2 330 601 wird weiterhin beschrieben, daß auch beide Ausgangskomponenten (NCO-reaktive Verbindung und Polyisocyanat) in dem inerten Lösungsmittel unlöslich sein können und daß eine der Ausgangskomponenten auch als Feststoff vorliegen kann. In diesem Falle ist es auch möglich, eine Suspension des Feststoffes in der NCO-reaktiven Verbindung dem inerten Lösungsmittel zuzusetzen, das einen Emulgator enthält. Entsprechende Beispiele sind in der genannten Patentschrift nicht angegeben.

In allen Fällen tritt eine Grenzflächen-Polyaddition ein und man erhält durchreagierte Polyurethane in feinverteilter Form. In der DE-OS 2 556 945 wird ein Verfahren zur direkten Herstellung von PUR-Pulvern beansprucht, bei dem die in der DE-OS 2 330 601 genannten verarbeitungstechnischen Nachteile nicht auftreten und die guten mechanischen Werte der Endprodukte dennoch erhalten bleiben. Es wird so verfahren, daß die nieder- und hochmolekularen Ausgangspolyole mit einem zusätzlichen monofunktionellen Isocyanatblockierungsmittel (z.B. Caprolactam) in einem inerten Lösungsmittel in Gegenwart einer oberflächenaktiven Verbindung emulgiert werden. Nach Zusatz eines aliphatischen oder aromatischen Polyisocyanates bildet sich ein PUR-Pulver, das noch freie OH- und NCO-Gruppen enthält. Diese Pulver zeigen eine deutlich geringere Schmelzviskosität, verbunden mit geringerer Verarbeitungstemperatur. Diese Temperatur reicht aber aus (150° C bis 190° C), um das thermisch instabile NCO-Addukt zu spalten. Nach Reaktion mit den noch freien OH-Gruppen (NCO-reaktive Verbd.) erhält man schließlich das völlig ausreagierte Polyurethan.

Nachteilig bei diesem Verfahren ist, daß das Blockierungsmittel während der Endverfestigung wieder freigesetzt wird und z.B. im Falle von Caprolactam heraussublimieren oder sich zumindest an der Oberfläche des Formteils anreichern kann (Ausschwitzen). Letzteres gilt für viele bekannten NCO-Blockierungsmittel.

Die bereits deutlich verringerte Verarbeitungstemperatur des so gewonnenen Pulvers liegt im Bereich der konventionellen thermoplastischen Verarbeitungstechnik und wird dort akzeptiert. Im Vergleich zu den in der PUR-Chemie üblichen Vernetzungsreaktionen liegt diese Verarbeitungstemperatur jedoch hoch und bedeutet einen beträchtlichen Energieaufwand.

Aufgabe der vorliegenden Erfindung war daher, ein einfaches Verfahren zur Herstellung von lagerstabilen PUR-Pulvern zu finden, die sich bereits bei einer Temperatur im Bereich von 100° C bis 150° C verfestigen lassen und die nach der Hitzeverfestigung keine freien NCO-Abspalter mehr enthalten.

Der vorliegenden Erfindung lag auch der Gedanke zugrunde, für die Herstellung von PUR-Pulvern feste Polyisocyanate zu verwenden, deren NCO-Gruppen nicht durch thermisch instabile Addukte blockiert sind, sondern vielmehr solche, die an der Teilchenoberfläche eine Diffusions-Sperrschicht besitzen, wie man sie bei Einwirkung von wenig aliphatischem Diamin auf ein Feststoffdiisocyanat erhält. Derartig modifizierte Feststoffdiisocyanate sind gegenüber dem Angriff NCO-aktiver Verbindungen "desaktiviert". Erst in der Hitze oder durch Einwirkung von organischen Lösungsmitteln oder Einwirkung von Scherkräften wird diese Diffusions-Sperrschicht zerstört bzw. durchlässig, so daß nunmehr die Polyaddition erfolgen kann. Das Verfahren zur "Retardierung von Feststoffpolyisocyanaten" wird in DE-OS 3 230 757 (EP 103 323) beschrieben.

In der DE-OS 2 330 601 wird darauf hingewiesen, daß vernetzte PUR-Pulver auch dann entstehen, wenn eine der Ausgangskomponenten als Feststoff vorliegt. Dieser Feststoff kann gegebenenfalls in der anderen flüssigen Komponente dispergiert vorliegen. Wird dieses heterogene Gemisch dem inerten Lösungsmittel in Gegenwart eines Emulgators zugesetzt, so erhält man nach einer gewissen Reaktionszeit völlig ausreagierte PUR-Pulver.

Nach dem vorliegenden Stand der Technik wurden daher einige Versuche durgeführt. Verwendet wurden jedoch andere und in der vorliegenden Patentliteratur noch nicht zitierte Ausgangsverbindungen. Als hochmolekulare Komponente wurde ein gegenüber NCO-Gruppen sehr reaktiver Aminoendgruppen enthaltender flüssiger Polyether eingesetzt (hergestellt gemäß EP-A 0 219 035, durch Hydrolyse eines NCO-Voradduktes aus einem Mol Polypropylenglykolether (Molgewicht 2.000, OH-Zahl 56) und zwei Mol TDI). Demgegenüber wurde als Polyisocyanatkomponente ein mit einer Diffusions-Sperrschicht versehenes Feststoffdiisocyanat verwendet (dimeres TDI, vgl. EP- 103 323).

Es wurde wie folgt verfahren (vgl. Versuchsbeispiel). Zu einer Lösung von wenig aliphatischem Diamin (Isophorondiamin) in dem $NH_2$-terminierten Polyether (Basis: Polypropylenglykolether Molgewicht 2.000) wurde die äquivalente Menge des dimeren TDI (TT) zugesetzt. Die Menge an aliphatischem Amin kann im Bereich von 0,01 bis 20 Äquivalent-% bezogen auf das feste Isocyanat, vorzugsweise zwischen 0,1 und 3 Äquivalent-%, liegen. Innerhalb kurzer Zeit bildet sich auf der Oberfläche der festen TT-Teilchen eine dünne Polyharnstoffhülle, die als Diffusions-Sperrschicht wirkt. Diese Dispersion ist daher bei Raumtemperatur stabil. Erst in der Hitze ($100\,^\circ$C bis $120\,^\circ$C) erfolgt Verfestigung und man erhält ein massives hochelastisches Formteil, mit hohem Wärmestand. Die angegebene Dispersion wurde nun einem inerten Lösungsmittel (Hexan) in Gegenwart einer oberflächenaktiven Verbindung (Antaron-V, Fa. GAF-Europa) zugesetzt, wobei mittels eines Hochgeschwindigkeitrührers eine wirkungsvolle Emulgierung des Ansatzes in Hexan erreicht werden konnte. Man erhält bei Raumtemperatur eine Emulsion fein verteilter Tröpfchen im inerten Lösungsmittel. Nach Beendigung des Rührens erfolgt alsbald Trennung beider Phasen und die Tröpfchen gehen nach längerer Standzeit in gröbere Partikel über. Nach Abtrennen des Hexans erhält man das eingesetzte Reaktionsprodukt in unveränderter Form wieder zurück. Eine Polyaddition hat nicht stattgefunden.

Dieses Ergebnis ist nun in zweifacher Hinsicht überraschend und konnte nach vorliegender Patentliteratur nicht erwartet werden.

Laut DE-OS 2 330 601 werden in einem inerten Lösungsmittel in Gegenwart von Emulgatoren auch dann völlig abreagierte Poylurethane erhalten, wenn sich sowohl die Polyol- wie auch die Polyisocyanatkomponente in dem inerten Lösungsmittel nicht lösen und wenn eine der Ausgangskomponenten als Feststoff vorliegt. Diese Lehre trifft in oben durchgeführtem Versuch nicht zu. Dies ist umso überraschender, da es sich um hochreaktive Komponenten mit $NH_2$-Gruppen handelt.

In der DE-OS 3 230 757 wird offenbart, daß Kombinationen aus "retardierten Feststoffpolyisocyanaten" (Diffusions-Sperrschicht durch Polyharnstoffhülle) und nieder- bzw. hochmolekularer NCO-reaktiver Verbindung zwar bei Raumtemperatur lagerstabil sind, daß jedoch bei Einwirkung von Lösungsmitteln (Anlösung bzw. Quellung der Diffusions-Sperrschicht) oder bei Einwirkung von Scherkräften (Hochgeschwindigkeitsrührer) eine spontane Polyaddition eintritt.

Auch diese Lehre trifft bei dem durchgeführten Versuch nicht zu. In beiden Fällen werden keine vernetzten Polyurethan-Harnstoffe erhalten. Man gewinnt die Ausgangskomponenten in unveränderter Form wieder zurück.

Im Zuge der weiteren Untersuchungen wurde der bei Raumtemperatur flüssige $NH_2$-Gruppen enthaltende Polyether durch einen bei Raumtemperatur festen $NH_2$-Gruppen enthaltenden Polyester (Polyadipat) ersetzt. Die Abmischung mit dem "Stabilisierungsdiamin" Isophorondiamin (IPDA) und dem dimeren TDI (TT) erfolgte daher oberhalb der Schmelztemperatur des $NH_2$-Polyesters ($50\,^\circ$C bis $60\,^\circ$C). Infolge der durch IPDA erzeugten Diffusions-Sperrschicht auf der Oberfläche der TT-Teilchen tritt auch bei dieser Temperatur keine Reaktion der Komponenten ein. Die so erhaltene Schmelze wurde unter Rühren einem inerten Lösungsmittel (Hexan), das noch eine oberflächenaktive Verbindung enthielt, zugetropft. Nach kurzer Zeit wird bei Raumtemperatur ein festes Pulver erhalten, das aus unverändertem $NH_2$-Polyester und TT besteht. Das in kugeliger Form ausfallende Pulver ist gut rieselfähig (Teil chengröße 5 bis 200 $\mu$m und kann nach üblicher "Pulvertechnik" verarbeitet werden.

Im Gegensatz zu den in DE-OS 2 330 601 und DE-OS 2 556 945 beschriebenen PUR-Pulvern sind die nach dem erfindungsgemäßen Verfahren hergestellten Pulver unvernetzt Sie bieten bei der Verarbeitung die entscheidenden Vorteile der geringeren Ausgangsviskosität der Schmelze und die rasche Verfestigung zu hochwertigen Produkten bei niedrigen Verfestigungstemperaturen.

Gegenstand der Erfindung ist somit ein Verfahren zur Herstellung von pulverförmigen in der Hitze aushärtbaren Reaktionsmischungen aus einem festen Polyisocyanat und bei Raumtemperatur festen NCO-aktiven hochmolekularen und gegebenenfalls festen oder flüssigen niedermolekularen Verbindungen, dadurch gekennzeichnet, daß das Reaktionsgemisch in Form einer Schmelzsuspension einem Emulgator enthaltenden inerten Lösungsmittel zugesetzt wird und daß das sich bildende pulverförmige Reaktionsgemisch alle Ausgangskomponenten in noch unvernetztem Zustand enthält.

Gegenstand der Erfindung sind weiterhin pulverförmige bei Raumtemperatur lagerstabile unvernetzte Reaktionsmischungen, die bei Einwirkung von Wärme zur Verfestigung gebracht werden können.

Gegenstand der Erfindung ist auch die Verwendung der durch Hitze aushärtbaren Reaktionsmischungen zur Herstellung hochwertiger Polyurethan-Harnstoff-Kunststoffe.

Für die erfindungsgemäßen Reaktiv-Pulver werden als Isocyanatkomponenten feste Polyisocyanate verwendet, die durch eine geeignete Mahlvorrichtung in eine Teilchengröße von 1 bis 200, vorzugsweise 1 bis 50 $\mu$m, überführt werden. Der Schmelzpunkt der Polyisocyanate soll oberhalb von 60$^\circ$ C, vorzugsweise oberhalb von 80$^\circ$ C liegen. Als Polyisocyanate kommen alle diejenigen in Betracht, die bereits in der Patentschrift EP 103 323 beschrieben werden.

Erfindungsgemäß werden bevorzugt:

dimeres 2,4-Diisocyanatotoluol (TT)

dimeres 4,4'-Diisocyanato-diphenylmethan

3,3'-Diisocyanato-4,4'-dimethyl-N,N'-diphenylharnstoff

N,N'-Bis(4(4-Isocyanatophenylmethyl)phenyl)-harnstoff

1,5-Diisocyanatonaphthalin

Die erfindungsgemäß zu verwendenden Polyester sind bei Raumtemperatur feste OH- und/oder $NH_2$-Endgruppen enthaltende Komponenten mit einem Molekulargewicht von 400 bis 10.000, vorzugsweise 1.000 bis 5.000. Der Schmelzpunkt bzw. der Erstarrungspunkt liegt in einem Bereich von 50$^\circ$ C bis 150$^\circ$ C, vorzugsweise 50$^\circ$ C bis 100$^\circ$ C

Die in Frage kommenden, Hydroxylgruppen aufweisenden Polyester sind z.B. Umsetzungsprodukte von mehrwertigen, vorzugsweise zweiwertigen, und gegebenenfalls zusätzlich drei- und mehrwertigen Alkoholen mit mehrwertigen, vorzugsweise zweiwertigen, Polycarbonsäuren oder deren Anhydriden oder entsprechenden Polycarbonsäureestern von niedrigen Alkoholen.

Die Polycarbonsäuren können aliphatischer, cycloaliphatischer, aromatischer, araliphatischer und/oder heterocyclischer Natur und gegebenenfalls, z.B. durch Halogenatome, substituiert, sie können aber auch ungesättigt sein.

Als Beispiele für solche Carbonsäuren und deren Derivate seien genannt: Adipinsäure, Sebacinsäure, Azelainsäure, Dodecandisäure, Phthalsäure, Isophthalsäure, Tetrahydrophthalsäureanhydrid, Tetrachlorphthalsäureanhydrid, Endomethylentetrahydrophthalsäureanhydrid, Glutarsäureanhydrid, Maleinsäureanhydrid, Fumarsäure, dimerisierte und trimerisierte ungesättigte Fettsäuren, Terephthalsäuredimethylester und Terephthalsäure-bis-glykolester.

Als mehrwertige Alkohole kommen z.B` Ethylenglykol, Propandiol-1,2 und -1,3, Butandiol-1,4 und -2,3, Hexandiol-1,6, Decandiol-1,10, Neopentylglykol, 1,4-Bis-hydroxymethylcyclohexan, 2-Methyl-1,3-propandiol, Glycerin, Trimethylolpropan, Hexantriol-1,2,6, Pentaerythrit, Chinit, Mannit und Sorbit, Formit oder Formose, Methylglykoxid, ferner Di-, Tri-, Tetra-ethylenglykole, -propylenglykole sowie -butylenglykole in Frage.

Auch Polyester aus Lactonen, z.B. C-Caprolacton, oder aus Hydroxycarbonsäuren, z.B. $\omega$-Hydroxycapronsäure, sind einsetzbar.

Als Polyacetale sind z.B. die aus Glykolen und Formaldehyd herstellbaren Verbindungen geeignet.

Als Hydroxylgruppen aufweisende Polycarbonate kommen solche der an sich bekannten Art in Betracht, z.B. die durch Umsetzung von Propandiol-1,3, Butandiol-1,4 und/oder Hexandiol-1,6, Di-, Tri- oder Tetraethylenglykol und Thiodiglykol, mit Diarylcarbonaten, z.B. Diphenylcarbonat, oder Phosgen, hergestellt werden können.

Weitere Vertreter der genannten zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32 bis 42 und Seiten 44 bis 54 und Band II, 1964, Seiten 5 bis 6 und 198 bis 199, sowie im Kunststoff-Handbuch, Band VII, Vieweg-Höchtlen, Carl-Hanser-Verlag, München, 1966, z.B. auf den Seiten 45 bis 71, sowie in der DE-A 2 854 384 ausführlich beschrieben.

Es ist selbstverständlich möglich, Mischungen der o.g. Polyhydroxylverbindungen einzusetzen.

Als höhermolekulare Polyaminoverbindungen mit aromatischen Aminogruppen mit einem Molgewichtsbereich, wie für höhermolekulare Polyesterverbindungen beschrieben, werden insbesondere solche Polyaminoverbindungen eingesetzt, wie sie durch Hydrolyse von entsprechenden NCO-Prepolymeren auf Basis der o.g. höhermolekularen Poly hydroxylverbindungen und überschüssigen aromatischen Diisocyanaten durch (vorzugsweise basische) Hydrolyse hergestellt werden können. Beispiele für dieses Verfahren werden in der DE-OS 2 948 419 angegeben. In der letztgenannten Patentschrift werden auch weitere Verfahren des Standes der Technik zur Herstellung von aromatischen Aminoverbindungen höhermolekularer Struktur genannt. Beispiele sind ferner die nach US-PS 2 888 439 zugänglichen Aminopolyether. Diese Verbindungen werden bevorzugt verwendet.

Zur Herstellung der erfindungsgemäßen Reaktiv-Pulver können auch bei Raumtemperatur feste höhermolekulare (Molgewicht 400 bis 10.000, vorzugsweise 1.000 bis 5.000) Verbindungen eingesetzt werden, die üblicherweise für die Synthese von Polyurethanen Verwendung finden, wie sie beispielsweise in DE-OS 2 920 501 angeführt sind. Es seien z.B. genannt: Polyether, Polyacetale, Polythioether.

Die erfindungsgemäßen langzeitlagerbeständigen Reaktiv-Pulver werden auch unter Mitverwendung von niedermolekularen bei Raumtemperatur festen oder flüssigen Kettenverlängerern oder Vernetzern hergestellt. Hierbei handelt es sich um zwei- oder mehrfunktionelle Verbindungen, welche an aliphatische und/oder cycloaliphatische Gruppen gebundene Hydroxylgruppen und/oder an aromatische, einschließlich heterocyclische, Ringe mit aromatischem Charakter, gebundene $NH_2$-Gruppen und Molekulargewichte zwischen 62 und 399 aufweisen. Bevorzugt sind dabei niedermolekulare Diole mit an aliphatische oder cycloaliphatische Gruppen gebundenen Hydroxylgruppen, sowie aromatische Diamine des genannten Molekulargewichtsbereichs.

Diese Verbindungen weisen in der Regel 2 bis 8, vorzugsweise 2 bis 4, besonders bevorzugt jedoch 2 gegenüber Isocyanaten reaktionsfähige Wasserstoffatome wie Hydroxyl- und/oder Aminogruppen auf. Es können selbstverständlich auch Mischungen von verschiedenen Kettenverlängerern oder Vernetzern verwendet werden. Als Beispiele für derartige Verbindungen seien genannt: Ethylenglykol, Trimethylenglykol, Butandiol-2,3 und/oder -1,4, Hexandiol-1,6, Neopentylglykol, 1,4-Bis-hydroxyethyl-cyclohexan, 1,4-Dihydroxycyclohexan, Terephthalsäure-bis(ß-hydroxyethyl)-ester, sowie weniger bevorzugt Diole mit sekundären Hydroxylgruppen, z.B. Propylenglykol, Butandiol-2,3, oder Pentandiol-2,5- Als mehrwertige Verbindungen seien genannt: Trimethylolpropan, Trimethylolethan, Hexantriol-1,2,6, Glycerin, Pentaerythrit, Chinit, Mannit, Sorbit, Rizinusöl, sowie Di-, Tri- und Tetraethylen-, -propylen-, und -butylen-glykole, ferner Bis-(2-hydroxyethyl)-hydrochinon, Bis-(2-hydroxyethyl)-resorcin, Formosa oder Formit. Ferner sind geeignet tertiär-aminhaltige Di- oder Polyole, z.B. N-Methyldiethanolamin, Triethanolamin oder N,N'-Bis-hydroxyethylpiperazin.

Bevorzugt werden jedoch anstelle von niedermolekularen Polyolen niedermolekulare aromatische Diamine eingesetzt. Unter aromatischen Polyaminen sollen auch solche Amine verstanden werden, welche die Aminogruppe an heterocyclische Reste mit aromatischem Charakter gebunden enthalten. Als aromatische Polyamine sind z.B. geeignet: p-Phenylendiamin, 2,4-/2,6-Toluylendiamine, Diphenylmethan-4,4'- und/oder -2,4'- und/oder -2,2'-diamine, 3,3'-Dichlor-4,4'-diaminodiphenylmethan, 3-($C_1$-$C_8$)-Alkyl-4,4'-diaminodiphenylmethane, die 3,3'-Di-($C_1$-$C_4$)-4,4'-diaminodiphenylmethane sowie die 3,3' ,5,5'-Tetra-($C_1$-$C_4$)-alkyl-4,4'-diphenylmethane, die 4,4'-Diaminodiphenyl-sulfide, -sulfoxide oder -sulfone, Ethergruppen aufweisende Diamine gemäß DE-A 1 770 525 und 1 809 172 (US-PS 3 654 364 und 3 736 295), gegebenenfalls in 5-Stellung substituierte 2-Halogen-1,3-phenylendiamine (DE-A 2 001 772, 2 025 896 und 2 065 869), Bisanthranilsäureester (DE-A 2 040 644 und 2 160 590), 2,4-Diaminobenzoesäureester nach DE-A 2 025 900, sowie durch eine oder zwei ($C_1$-$C_4$)-Alkylgruppen substituierte Toluylendiamine. Besonders bevorzugt sind 3,5-Diethyl-2,4-und/oder -2,6-diaminotoluol (besonders ihre technischen (80/20) oder (65/35)-Isomerengemische), unsymmetrisch tetraalkyl-substituierte Diaminodiphenylmethane, z.B. 3,5-Diethyl-3'-5'-diisopropyl-4,4'-diaminodiphenylmethan, 4,4'-Diaminobenzanilid, sowie 3,5-Diaminobenzoesäure-($C_1$-$C_4$)-alkylester, 4,4'- und/oder 2,4'-Diaminodiphenylmethan, sowie Naphthylen-1,5-diamin.

Die aromatischen Diamine sind bevorzugt vor den Glykolen. Es sind jedoch auch Diole oder Diamine mit zusätzlichen Gruppen einsetzbar, z.B. Adipinsäure-bis (2-hydroxyethyl)-ester, Terephthalsäure-bis-(2-hydroxyethyl)-ester, Diol-urethane, Diol-harnstoffe oder Polyole, welche Sulfonat- und/oder Phosphonatgruppen enthalten, z.B. 1,6-Hexamethylen-bis-(2-hydroxyethylurethan), 4,4'-Diphenylmethan-bis(2-hydroxyethylharnstoff). Weitere niedermolekulare Verbindungen werden ausführlich in DE-OS 28 54 384 beschrieben.

Als Katalysatoren für die erfindungsgemäß langzeitlagerstabilen Einkomponentensysteme können die üblichen Polyurethankatalysatoren, mit besonders gutem Effekt aber organische Blei- und/oder Zinnverbindungen verwendet werden, gegebenenfalls unter Mitverwendung weiterer, üblicher Polyurethankatalysatoren, insbesondere von tert.-Amin-haltigen Katalysatoren.

Als organische Flüssigkeiten können zur Herstellung der erfindungsgemäßen Reaktiv-Pulver solche Lösungsmittel verwendet werden, die mit den Reaktionspartnern nicht reagieren und in denen die Reaktionsteilnehmer nicht oder nur schwer löslich sind. Geeignet sind organische Flüssigkeiten mit einem Siedepunkt von 60°C bis 200°C, z.B. Kohlenwasserstoffe, halogenierte Kohlenwasserstoffe und Ether. Insbesondere haben sich flüssige Kohlenwasserstoffe, vorzugsweise aliphatische Kohlenwasserstoffe, wie z.B. Petroleumfraktionen als geeignet erweisen, da sie bei niedrigen Kosten ein ideal inertes Verhalten gegenüber den Reaktionskomponenten aufweisen und leicht und vollständig vom Endprodukt entfernt werden können.

Von großer Wichtigkeit bei der Durchführung des Verfahrens ist die Verwendung eines wirksamen oberflächenaktiven Mittels, das die Emulsion der fein verteilten Schmelztröpfchen zu bilden und aufrechtzuerhalten ermöglicht, bis sie in einen festen Zustand übergehen. Über Art bzw. Konstitution solcher Emulgatoren bei nicht wäßrigen Emulsionen sowie über theoretische Grundlagenkenntnisse sei auf vorliegende Literatur verwiesen. So z.B. Becker ("Emulsions, Theory and Practise", 2. Auflage, Seite 233) oder J.H. Schulmann and J Leja (Transactions of the Faraday Society, Bd. 50, Seite 598). Darüber hinaus wird auch in der Patentliteratur (DE-OS 2 330 601 und DE-OS 2 556 945) eingehend über die Wirksamkeit und chem. Konstitution von Emulgatoren für nicht wäßrige Systeme berichtet.

Für die Herstellung der erfindungsgemäßen Reaktiv-Pulver haben sich nach Ausprüfung verschiedener bekannter Emulgatoren insbesondere diejenigen als sehr günstig erwiesen, die durch Polymerisation von Vinylpyrrolidon mit langkettigen $\alpha$-Olefinen hergestellt werden. Diese Produkte sind unter der Bezeichnung Antaron-V im Handel (z.B. Fa. GAF-Europa, Esher, Surrey-England).

Die Herstellung der erfindungsgemäßen Reaktiv-Pulver gestaltet sich technisch einfach.

Der bei Raumtemperatur feste Polyester wird in einem entsprechenden Reaktionsgefäß aufgeschmolzen. Zu dieser Schmelze werden die gegebenenfalls zu verwendenden niedermolekularen Kettenverlängerer, Katalysatoren und das Feststoffpolyisocyanat in Pulver-Form zugesetzt. Durch eine geeignete Rührvorrichtung wird für eine gute Durchmischung des Reaktionsansatzes gesorgt.

Werden gegenüber Isocyanaten reaktive Ausgangskomponenten, wie z.B. Amino-Endgruppen enthaltende nieder- oder hochmolekulare Verbindungen verwendet, dann ist eine zusätzliche "Desaktivierung" des Feststoffdiisocyanates mit aliphatischen Polyaminen erforderlich. Durch die auf der Teilchen-Oberfläche des Isocyanates sich bildende Diffusions-Sperrschicht wird verhindert, daß eine vorzeitige Reaktion bereits im Rührgefäß erfolgt, die zu einer deutlichen Viskositätserhöhung bzw. Verquallung des Ansatzes führen könnte. Im allgemeinen werden die geringen Mengen des aliphatischen Diamins vor dem Zusatz des festen Polyisocyanates zugesetzt (vergl. Beispiel). Die Schmelze wird nun unter intensivem Rühren einem inerten Lösungsmittel langsam zugefügt. Hierbei ist manchmal empfehlenswert, das inerte Lösungsmittel zu kühlen, insbesondere dann, wenn der Schmelzpunkt des Polyesters in einem tieferen Temperaturbereich liegt (z.B. 50 bis 70 °C). Die Menge des Lösungsmittel ist nicht von entscheidender Bedeutung. Es genügt im Allgemeinen die 1- bis 5fache, vorzugsweise 1- bis 2fache Menge, bezogen auf den Reaktionsansatz, zum Einsatz zu bringen.

Es ist unbedingt erforderlich, daß das inerte Lösungsmittel eine oberflächenaktive Verbindung enthält, die die einfließende Schmelze rasch in eine Emulsion feinverteilter Tröpfchen überführt. Die zu verwendende Menge der oberflächenaktiven Verbindung kann im Bereich von 0,5 bis 10 Gew.-%, bezogen auf das Gesamtgewicht der Reaktionspartner, liegen. Im allgemeinen verwendet man 2 bis 6 Gew.-%, bezogen auf das Gesamtgewicht der Reaktionspartner. Die in feinverteilter Form entstehenden flüssigen Tröpfchen erstarren alsbald zu festen Partikeln. Eine Zusammenlagerung zu größeren Agglomeraten wurde in keinem Falle beobachtet. Die Umwandlung vom flüssigen in den festen Zustand ist naturgemäß abhängig vom Schmelzpunkt der hochmolekularen NCO-reaktiven Verbindung und erfolgt umso schneller, je höher der Schmelzpunkt liegt. Nach Abstellen des Rührwerkes tritt rasch Sedimentation des Festkörpers ein, so daß man das entstandene Pulver ohne Schwierigkeiten vom inerten Lösungsmittel abtrennen kann.

Man erhält ein rieselfähiges Reaktiv-Pulver in Form kugeliger Teilchen mit einem Durchmesser von 5 bis 200 $\mu$m. Unter dem Mikroskop ist zu erkennen, daß das Feststoffdiisocyanat (Durchmesser ca. 5 $\mu$m) innerhalb der einzelnen Kügelchen eingeschlossen ist und vom festen Polyester völlig umgeben ist. Dies ist insofern ein Vorteil, daß solche Pulver nach dem Aufschmelzen an sich homogener sind und diese Pulver sich bei längerer Lagerung nicht so schnell in die einzelnen Festkörperanteile trennen.

Reaktiv-Pulver, bei denen die festen Hauptkomponenten getrennt voneinander vorliegen, können durch einfaches Mischen der Einzelkomponenten im inerten Lösungsmittel hergestellt werden, wobei zunächst die Emulsion der NCO-reaktiven Verbindung dargestellt wird. Nach dem Erstarren der Schmelztröpfchen wird dann das Feststoffdiisocyanat zugesetzt und die Mischung gut homogenisiert. Dieses Verfahren ist aber aus den bereits genannten Gründen nicht bevorzugt.

Ein charakteristisches Merkmal der Reaktiv-Pulver ist, daß sie im Gegensatz zu den in der Patentliteratur beschriebenen Pulvern aus noch nicht ausreagierten Ausgangskomponenten bestehen. Überraschenderweise auch dann nicht, wenn sehr reaktionsfreudige Verbindungen, wie z.B. nieder- und hochmolekulare $NH_2$-Endgruppen enthaltende Komponenten vorliegen.

Die Verarbeitung der Pulver kann nach bekannten technischen Verfahren erfolgen. Oberhalb des Schmelzpunktes der festen NCO-aktiven Komponente erhält man eine flüssige Suspension, die sich bei weiterer Temperaturerhöhung rasch zum Endprodukt verfestigt. Der Übergang vom Pulver zur Schmelze ist abhängig vom Schmelzpunkt der NCO-aktiven Verbindung. Der Übergang der Schmelze zum festen Endprodukt kann dagegen durch die Diffusions-Sperrschicht am Feststoffpolyisocyanat, durch Katalysatoren und die Temperatur gesteuert werden. Wählt man Ausgangsverbindungen dergestalt, daß der Übergang von der Schmelzsuspension zum Endprodukt langsam abläuft, so lassen sich die Pulver auch im Gießverfahren verarbeiten. In diesem Falle besitzen die Reaktionsansätze noch ausreichende "Topfzeit". Im allgemeinen werden die Reaktiv-Pulver jedoch nach den bekannten Verfahren der Pulvertechnik verarbeitet.

Als besonderer Vorteil ist das gute Fließverhalten der Pulver im geschmolzenen Zustand hervorzuheben. Dies ist bei der Herstellung von Formteilen mit schwieriger Geometrie unbedingt erforderlich. Ein weiterer Vorteil liegt darin, daß die niedrig viskosen Schmelzen sehr viel mehr Füllstoffe (Mineralien, Glaspulver) als hochviskose aufzunehmen imstande sind.

Die erfindungsgemäßen Reaktiv-Pulver besitzen eine durchschnittliche Teilchengröße von etwa 200 µm bis hinab zu etwa 5 µm. Diese Größe wird weitgehend durch die Art und Menge des oberflächenaktiven Mittels, der Intensität des Rührens und der Temperatur geregelt und eingestellt. Bei einem gegebenen System und einer gegebenen apparativen Ausrüstung wird die Teilchengröße kleiner, wenn die Menge der oberflächenaktiven Verbindung erhöht wird und umgekehrt. Teilchen in diesem Größenbereich eignen sich gut für die verschiedensten Anstrich- und Beschichtungsverfahren, z.B. für das Wirbelsintern, für das elektrostatische Spritzverfahren, für die Beschichtung nach dem Pulverfließverfahren (Powder coating) und für das Hitze-Aufschmelzverfahren zur Bildung von Überzügen auf flexiblen Werkstücken. Die Pulver eignen sich ferner als Heißschmelzkleber. Hierbei wird das Pulver im allgemeinen auf die gewünschte Oberfläche in pigmentierter Form aufgebracht und auf seine "Aktivierungstemperatur" erhitzt.

Ein weiteres Einsatzgebiet für die Reaktiv-Pulver ist die Herstellung von Zweiphasensystemen. Hierbei werden die festen Pulver im Gemisch mit üblichen OH- und/oder $NH_2$-terminierten Polyalkylenoxidethern verwendet, wobei der flüssige Polyether das Suspendiermedium für das Pulver darstellt und mit konventionellen Polyisocyanaten (TDI, MDI) und gegebenenfalls Katalysatoren/Hilfsstoffen in gewohnter Verfahrenstechnik umgesetzt wird. Dieses Verfahren ist nur dann durchführbar, wenn das ReaktivPulver schwer löslich in dem Polyether ist (z.B. Polypropylenoxidether). Bei geeigneter Temperaturführung kann die Polyaddition in zwei zeitlich voneinander getrennten Schritten durchgeführt werden. Im ersten Schritt erfolgt die Reaktion des Polyethers mit dem flüssigen Polyisocyanat, wobei die Reaktionstemperatur unterhalb des Schmelzpunktes der Reaktiv-Pulver bleiben muß. Das so erhaltene Polyurethan (Polyethermatrix) kann dann sofort oder zu einem beliebigen Zeitpunkt durch Temperaturerhöhung endverfestigt werden, wobei nunmehr das Reaktiv-Pulver aushärtet. Man erhält schließlich hochelastische homogene Zweiphasensysteme aus Polyester und Polyether, wobei das mechanisch bessere Urethan, das Polyesterurethan, die Gesamteigenschaften des Elastomeren sehr stark positiv beeinflußt (Verstärkungseffekt).

Zweiphasensysteme dieser Art können nach üblicher Polyaddition mit Isocyanaten nicht hergestellt werden, da sich die flüssigen Phasen, Polyether- und Polyesterschmelze, infolge ihrer Unverträglichkeit (Unlöslichkeit) sofort trennen und man nach der Polyaddition nur inhomogene und vielfach an der Oberfläche klebrige Endprodukte erhält.

Es ist selbstverständlich möglich, den Pulvern oder auch den Pulver-Schmelzen Füllstoffe jeglicher Art zuzusetzen (z.B. Kieselsäure, Kreide, Glasfasern, Glaspulver). Dieser Füllstoffzusatz kann bei der weiteren Verarbeitung hinsichtlich Fließverhalten, Verfestigungsbild, Verfestigungsgeschwindigkeit oder Preis von Vorteil sein.

Das erfindungsgemäße Verfahren soll anhand der folgenden Beispiele näher erläutert werden.

Beispiele
Beispiel 1

200 g eines Polyesters (Molgewicht 2.000, OH-Zahl-56) aus Adipinsäure und einem Gemisch aus Ethylenglykol und 1,4-Butandiol werden unter Rühren und Entgasen mittels eines Wasserstrahlvakuums aufgeschmolzen. Zu dieser Schmelze wird bei ca. 60° C 0,1 g eines Zinn-Katalysators UL 29 (Dioctyl-Sn-bismercaptoessigsäureester der Firma Witco) zugesetzt. Danach erfolgt Zugabe von 36 g dimerem TDI (TT, Fp: 154° C). Der Reaktionsansatz wird homogen vermischt und dann in eine Lösung von 4 g ANATARON V 216 (Emulgator der Firma GAF-EUROPA) in 400 g Waschbenzin bei 5 bis 10° C zugetropft, wobei unter kräftigem Rühren eine wirksame Emulgierung der Schmelze im inerten Lösungsmittel erreicht wird. Nach kurzer Zeit erstarren die feinverteilten Schmelztröpfchen und man erhält nach dem Abtrennen durch Filtration ein rieselfähiges kugeliges Pulver, (Teilchendurchmesser 5 - 100 µm), das bei Raumtemperatur eine Lagerstabilität von mehreren Wochen aufweist.

Zu einem beliebigen Zeitpunkt kann dieses Reaktiv-Pulver in eine mit Trennmittel versehene Form geschüttet werden und dann bei einer Temperatur von 50 bis 60° C zum vollständigen Verfließen gebracht werden. Die weitere Verfestigung erfolgt dann bei ca. 120 bis 130° C. Nach ca. 2 Stunden kann der Probekörper aus der Form genommen werden. Nach einer Lagerung von ca. 7 Tagen bei Raumtemperatur ergeben sich folgende mechanischen Eigenschaften.

| | |
|---|---|
| Modul (100 %)/MPa | 8,9 |
| Zugfestigkeit/MPa | 42 |
| Bruchdehnung/% | 650 |
| Weiterreißfestigkeit/KN/m | 45 |
| Elastizität/% | 57 |
| Härte/Shore A | 84 |

Beispiel 2

Zu 200 g eines $NH_2$-Endgruppen enthaltenden linearen Polyesters (NH-Zahl-43,1), der durch alkalische Hydrolyse eines NCO-Voradduktes aus 1 Mol Polyester (Basis: Adipinsäure und Ethylenglykol, Molgewicht: 2.000, OH-Zahl-56) und 2 Mol 2,4-Diisocyanato-toluol (TDI) hergestellt wurde, werden nach dem Aufschmelzen bei 50 bis 60°C 0,4 g LAROMIN C (Bis-(3-methyl-4-aminocyclohexyl)-methan der Firma BASF) zugesetzt. Danach erfolgt die Zugabe von 24,2 g dimerem TDI. Nach genügender Durchmischung wird die Schmelzsuspension in 400 g Hexan, das 4 g ANTARON V 226 enthält, unter starkem Rühren eintropft. Die Temperatur beträgt hierbei ca. 10 bis 15°C. Nach etwa 1 Stunde kann das nunmehr feste Reaktiv-Pulver abgetrennt werden. Dieses Pulver ist über einen Zeitraum von mehreren Monaten bei Raumtemperatur lagerstabil.

Nach der im Beispiel 1 angegebenen Weise wird durch Hitzeverfestigung bei 120 bis 130°C ein hochwertiges PUR-Harnstoff-Material erhalten. Das Elastomer wurde noch 2 bis 3 Stunden bei 120°C nachgetempert.

Das im Gießverfahren hergestellte Elastomer zeigt folgende Eigenschaften:

| | |
|---|---|
| Modul (100 %)/MPa | 10,5 |
| Zugfestigkeit/MPa | 38,6 |
| Bruchdehnung/% | 620 |
| Weiterreißfestigkeit/KN/m | 76,5 |
| Elastizität/% | 45 |
| Härte/Shore A | 94 |

Beispiel 3

200 g eines linearen festen Polyesters aus Adipinsäure und Ethylenglykol (Molgewicht: 2.000, OH-Zahl-56) werden auf 60°C erwärmt. Zu dieser Schmelze werden unter Rühren 6 g 1,4-Butandiol (Kettenverlängerer), 0,4 g UL 29 (Katalysator) und 3 g Ethylendiamin ("Umhüllungsdiamin" für die Diffusions-Sperrschicht) zugegeben. Schließlich erfolgt die Zugabe von 56,4 g 1,5-Diisocyanatonaphthalin (NDI), das in einer Luftstrahlmühle auf eine Teilchengröße von 5 - 50 μm gemahlen wurde. Die Schmelzsuspension wird mittels eines Wasserstrahlvakuums entgast und danach in eine Lösung von 4 g ANTARON V 216 (Emulgator) in 500 g Hexan bei 10 bis 15°C unter kräftigem Rühren eingetropft. Nach ca. 1 bis 2 Stunden kann das entstandene Reaktiv-Pulver auf Basis von NDI abgetrennt werden. Auch hier erhält man ein rieselfähiges Pulver, das über mehrere Monate bei Raumtemperatur lagerstabil ist. Um einen Einblick in die mechanischen Eigenschaften der verfestigten Endprodukte zu erhalten, wurde das ReaktivPulver im Gießverfahren zu einem Elastomeren mit folgenden Werten verarbeitet:

| Modul (100 %)/MPa | 7,5 |
|---|---|
| Zugfestigkeit/MPa | 52,8 |
| Bruchdehnung/% | 621 |
| Weiterreißfestigkeit/KN/m | 64,2 |
| Elastizität/% | 55 |
| Härte/Shore A | 87 |

Dieses Elastomer zeigt ein beachtlich hohes mechanisches Werteniveau.

Beispiel 4

400 g eines NH$_2$-Endgruppen enthaltenden Polyesters (NH-Zahl-33,4) auf Basis eines Polyesters aus Adipinsäure und einem Gemisch aus Ethylenglykol und 1,4-Butandiol (Molgewicht: 2.000, OH-Zahl-56) werden in geschmolzener Form bei 60 bis 70°C mit 1 g LAROMIN C (für Diffusions-Sperrschicht) und danach mit 43,8 g 3,3-Diisocyanato-4,4-dimethyl-N,N-diphenylharnstoff (hergestellt aus 2 Mol 2,4-Diisocyanato-toluol und 1 Mol Wasser, Fp: > 230/Zersetz.) vermischt. Die Schmelzsuspension wird nach dem Entgasen in eine Lösung von 7 g ANTARON V 226 in 800 g Waschbenzin bei einer Temperatur von 5 bis 10°C zugesetzt. Man erhält nach bereits beschriebener Weise 395 g eines Reaktiv-Pulvers in Form kugeliger Teilchen. Die Verfestigung des Pulvers erfolgt bei ca. 130°C, wonach man ein hochwertiges Elastomer erhält, das sich insbesondere durch hohen Wärmestand auszeichnet.

Folgende mechanischen Eigenschaften wurden gemessen:

| Modul (100 %)/MPa | 10,8 |
|---|---|
| Zugfestigkeit/MPa | 40,5 |
| Bruchdehnung/% | 650 |
| Weiterreißfestigkeit/KN/m | 87,8 |
| Elastizität/% | 55 |
| Härte/Shore A | 95 |

Beispiel 5

Das in Beispiel 4 beschriebene Reaktiv-Pulver wird nunmehr mit einem niedermolekularen flüssigen NH$_2$-Gruppen tragenden Kettenverlängerer (2,4-Diamino-3,5-diethyltoluol) modifiziert. In bereits erwähnter Verfahrenstechnik wird daher eine Schmelzsuspension aus folgenden Komponenten hergestellt, die danach in einer Hexan/ANTARON V Lösung in das Reaktiv-Pulver überführt wird,

200 g eines NH$_2$-Polyesters (vergl. Beispiel 4), 0,5 g LAROMIN C ("Umhüllungsamin" für das Feststoffdiisocyanat), 10 g 2,4-Diamino-3-5-diethyltoluol (Kettenverlängerer) 48 g 3,3-Diisocyanato-4,4-dimethyl-diphenylharnstoff.

Das aus dem Reaktiv-Pulver in beschriebener Weise erhaltene Elastomer zeichnet sich durch hohe Steifigkeit (Härte Shore D 58) und insbesondere durch sehr hohen Wärmestand aus.

Beispiel 6

Der in Beispiel 5 erwähnte flüssige niedermolekulare NH$_2$-Gruppen tragende Kettenverlängerer wird in diesem Beispiel durch einen festen hochschmelzenden NH$_2$-Gruppen tragenden Kettenverlängerer, den aus 2,4-Toluylendiamin und Harnstoff zugänglichen 3,3'-Diamino-4,4'-dimethyldiphenylharnstoff (Schmelzpunkt: 235°C unter Zersetz.) ersetzt. Die Schmelzsuspension setzt sich aus folgenden Komponenten zusammen:

200 g eines NH$_2$-Polyesters (vergl. Beispiel 4 und 5)

0,9 g LAROMIN C

17,3 g 3,3-Diamino-4,4-dimethyl-diphenylharnstoff

42,6 g 3,3-Diisocyanato-4,4-dimethyl-diphenylharnstoff

Nach beschriebener Weise werden in Waschbenzin/Antaron V 216-Lösung 225 g eines Reaktiv-Pulvers erhalten.

Wird dieses Pulver auf ein Metallblech aufgetragen und dann einer Temperatur von 120 bis 130°C ausgesetzt, so resultiert bereits nach kurzer Zeit ein harter aber elastischer Überzug des Polyurethan-Harnstoffes mit guter Haftung auf dem Metall (verzinktes Eisenblech).

Beispiel 7

Die Reaktiv-Pulver können vorteilhaft auch im Gemisch mit solchen OH- oder $NH_2$-terminierten Polyethern Verwendung finden, in denen die Pulver-Komponenten schwer löslich und die sich bildende Suspension bei Raumtemperatur längere Zeit lagerstabil sind. Das flüssige Polyol (Suspendiermedium) kann dann mit einem konventionellen flüssigen oder festen Polyisocyanat (TDI, MDI, TT) vernetzt werden. Läuft diese Polyaddition in einem Temperaturbereich ab, in dem das Reaktiv-Pulver noch nicht rea giert, so bildet das entstehende Polyurethan- bzw. Polyharnstoff-System die Einbettmasse (Matrix) für das noch unveränderte Pulver bzw. die noch nicht verfestigten Schmelztröpfchen (bei Temperaturen oberhalb des Schmelzpunktes des Polyesters). Die Endverfestigung dieser Zwei-Phasensysteme kann dann in einem Schritt oder zu einem beliebigen Zeitpunkt bei erhöhter Temperatur (120 bis 130°C) erfolgen, wonach ein völlig vernetztes und homogen erscheinendes Zwei-Phasensystem aus z.B. Polyetherurethan und Polyesterurethan entsteht. Ob das Polyetherurethan oder das Polyesterurethan die Einbettmasse (Matrix) im Zwei-Phasensystem bildet, wird dadurch bestimmt, in welchen Mengenverhältnissen beide Stoffgruppen im Reaktionsgemisch vorliegen.

Im vorliegenden Beispiel wird als Suspendiermedium für das Reaktiv-Pulver ein bereits lagerstabiles hitzehärtbares System verwendet, das durch Abmischen folgender Komponenten gewonnen wurde: (A).

200 g  eines $NH_2$-Gruppen enthaltenden Polypropylenglykolethers ($NH_2$-Zahl-47), hergestellt durch alkalische Hydrolyse eines NCO-Vorproduktes aus 1 Mol PPG-Ether (Molgew.: 2.000, OH-Zahl-56 und 2 Mol TDI,

0,3 g  Laromin C und

14,6 g  dimerem TDI (TT).

Zu 100 g der flüssigen Abmischung A werden 70 g des in Beispiel 6 beschriebenen Reaktiv-Pulvers zugesetzt und homogen verrührt. Nach dem Entgasen wird der Reaktionsansatz in eine Form gegossen und allmählich auf 120 bis 130°C gebracht. Man erhält nach kurzer Zeit ein homogenes Elastomer mit folgenden mechanischen Eigenschaften (B).

In analoger Weise wird auch aus dem Suspendiermedium durch Erwärmen auf 120 bis 130°C ein Elastomer mit dem unten angegebenen Werteniveau hergestellt (A):

|  | A | B |
|---|---|---|
| Modul (100 %)/MPa | 8,2 | 11,9 |
| Zugfestigkeit/MPa | 13,5 | 20,5 |
| Bruchdehnung/% | 700 | 550 |
| Weiterreißfestigkeit/KN/m | 26,9 | 47,5 |
| Elastizität/% | 68 | 66 |
| Härte/Shore A | 94 | 95 |

Der Wertevergleich von A und B zeigt deutlich den verstärkenden Effekt des Polyester-Urethan-Harnstoffs im Zwei-Phasensystem, wobei die Werte für Weiterreißfestigkeit und Zugfestigkeit beachtlich verbessert werden.

Beispiel 8

Zu 100 g eines trifunktionellen Polypropylenglykolethers (Molgew. 3.000, OH-Zahl 56) werden 0,1 g UL

EP 0 431 413 A2

29 (Katalysator der Firma Witco) und anschließend 40 g des in Beispiel 4 beschriebenen Reaktiv-Pulvers zugesetzt. Der Ansatz wird gut vermischt und entgast. Der Zusatz des Reaktiv-Pulvers bewirkt zwar eine Viskositätserhöhung, eine Verarbeitung des Ansatzes ist jedoch noch gut möglich. Es werden nun 18,3 g eines flüssigen, mit $T_{ripro}$-pylenglykol modifizierten 4,4-Diisocyanato-diphenylmethans (MDI) eingerührt. Nach ca. 3 Stunden erhält man bei Raumtemperatur ein weiches elastisches Material, in dem das Reaktiv-Pulver in unveränderter Form vorliegt.

Wird dieses Zwischenprodukt 2 bis 3 Stunden bei 120°C ausgeheizt, so resultiert ein hochelastischer homogen erscheinender Formkörper mit trockener Oberfläche. In diesem Zwei-Phasensystem wird die Matrix durch das Polyetherurethan gebildet, in dem die hochelastischen Polyester-Partikel in vernetzter Form vorliegen und somit einen verstärkenden Effekt auf das Endprodukt ausüben.

Beispiel 9 (slush molding)

Die Reaktiv-Pulver können auch vorteilhaft für das slush molding Verfahren Verwendung finden. In vorliegendem Beispiel sei diese Verarbeitungstechnik an Hand einer speziellen Versuchsapparatur gezeigt.

Die Apparatur besteht aus einer ca. 300 x 300 x 100 mm großen, geformten Oberschale und einem trogförmig ausgebildeten Unterteil. Beide Formteile werden durch geeignete Spannvorrichtungen zusammengehalten und mittels einer Flachdichtung zwischen den beiden Schalen abgedichtet. Die Form wird in einer fixierbaren Drehvorrichtung gelagert. Die Unterschale ist bis zur Oberkante temperierbar.

Desweiteren wird ein üblicher Heizschrank eingesetzt, der dazu dient, die konturgebende Oberschale auf Arbeitstemperatur zu erhitzen und die gebildeten Außenhaut-Formteile nachzutempern.

Versuchsdurchführung:

In das trogförmige Unterteil wird das pulverförmige, auf 25°C temperierte Einkomponentensystem in einer solchen Menge eingefüllt, daß die Oberschale zumindest vollständig ausgefüllt werden kann.

Die auf 130°C erhitzte Oberschale wird nach Einlegen der Flachdichtung auf das Formunterteil aufgespannt und die Gesamtform um 180°C um die horizontale Achse gespannt. Hierbei füllt das Einkomponentensystem aus dem Formunterteil die inzwischen auf 110 bis 120°C abgekühlte Oberschale aus und beginnt an der Wandung der Oberschale zu reagieren, wobei über eine flüssig-hochviskose Phase und eine erneute Verfestigung eine Kompakthaut gebildet wird. Die Wandstärke des Elastomers kann durch die Temperatur der Oberschale und die Kontaktzeit der erhitzten Oberschale mit dem Einkomponentensystem gesteuert werden.

Nach einer vorher festgelegten Zeit (z.B. 30 sec) wird die zweiteilige Form wieder in den Ausgangszustand zurückgeschwenkt; das Abfallen des Pulvers aus der Oberschale in den Untertrog kann durch Klopfen an der Oberschalenwandung unterstützt werden. Das an der Formwand der Oberschale verfestigte Einkomponentensystem wird mit der Oberschale vom Formunterteil getrennt und in der Oberschale 10 min bei 120°C im Heizschrank getempert und dann im abgekühlten Zustand entformt.

Diese Außenhäute besitzen das erwünschte hohe mechanische Eigenschaftsniveau, wobei insbesondere die Weiterreißfestigkeit von großem Interesse ist. In vorliegendem Beispiel beträgt sie 56,4 KN/m. Der harte Wärmealterungstest (500 Stunden bei 130°C) wird erfüllt. Die Außenhäute behalten ihre elastomeren Eigenschaften.

Das Außenhaut-Formteil kann dann in eine, die gleiche Kontur wie die Oberschale aufweisende, übliche Schäumform eingelegt und mit einem beliebigen Polyurethanschaum-System hinterschäumt werden. (Verwendungszweck: z.B. Armlehnen für den Automobilsektor).

**Ansprüche**

1. Verfahren zur Herstellung von pulverförmigen, in der Hitze aushärtbaren Reaktionsmischungen aus einem festen Polyisocyanat und bei Raumtemperatur festen NCO-aktiven hochmolekularen und gegebenenfalls festen oder flüssigen niedermolekularen Verbindungen, dadurch gekennzeichnet, daß das Reaktionsgemisch in Form einer Schmelze einem Emulgator enthaltenden inerten Lösungsmittel zugesetzt wird und daß das sich bildende pulverförmige Reaktionsgemisch alle Ausgangskomponenten in noch unvernetztem Zustand enthält.

2. Verfahren gemäß Anspruch 1, dadurch gekennzeichnet, daß ein Emulgator verwendet wird, der durch Polymerisation von Vinylpyrrolidon mit langkettigen alpha-Olefinen erhalten wird.

11

3. Verfahren gemäß einem der Ansprüche 1 oder 2, dadurch gekennzeichnet, daß die Feststoffdiisocyanate auf ihrer Teilchenoberfläche eine Diffusions-Sperrschicht aufweisen, wie sie durch Behandlung der festen Polyisocyanate in Gegenwart der NCO-aktiven Verbindungen mit aliphatischen Polyaminen gebildet wird.

4. Verfahren gemäß einem der Ansprüche 1 bis 3, dadurch gekennzeichnet, daß als NCO-aktive Verbindungen Polyester eingesetzt werden, die einen Schmelz- bzw. Erweichungspunkt von 50 bis 150, vorzugsweise 50 bis 100°C besitzen und in einem Molekulargewichtsbereich von 500 bis 10.000, vorzugsweise von 500 bis 6.000, liegen.

5. Verfahren gemäß einem der Ansprüche 1 bis 4, dadurch gekennzeichnet, daß als hochmolekulare NCO-aktive Verbindungen NH$_2$-Endgruppen enthaltene Komponenten mit einem Molekulargewicht von 500 bis 10.000, vorzugsweise 500 bis 6.000, verwendet werden.

6. Verwendung von hitzehärtbaren Reaktiv-Pulvern, erhältlich gemäß einem der Ansprüche 1 bis 5 zur Herstellung von Polyurethan-Polyharnstoffen.